# EUROPEAN PATENT APPLICATION

(11) **EP 2 999 279 A1**
(43) Date of publication of application: **23.03.2016**
(21) Application number: 15183699.6
(22) Date of filing: 03.09.2015
(51) Int. Cl.: H04W 68/00, H04W 72/00

(54) **METHOD FOR PROVIDING AN EMBMS AND ELECTRONIC DEVICE FOR SAME**

(30) Priority: 03.09.2014 KR 20140117113
(71) Applicant: Samsung Electronics Co., Ltd., Gyeonggi-do 16677 (KR)
(72) Inventor: Yoon, Su-Ha, 16677 Suwon-si (KR); Park, Ji-Hyun, 16677 Suwon-si (KR); Son, Kwang-Sub, 16677 Suwon-si (KR); Choi, Won-Suk, 16677 Suwon-si (KR)
(74) Representative: Nederlandsch Octrooibureau

(57) **Abstract**

A method for providing content by an electronic device is provided. The method includes receiving, from a base station, messages related to one or more content providing services which can be received in a service available area of the base station, acquiring, from the messages, service information on a content providing service which can be used by the electronic device from among the one or more content providing services, and notifying a user of the service information by changing and displaying icons corresponding to the one or more content providing services according to the service information.

## Description

### TECHNICAL FIELD

The present disclosure relates to an electronic device for providing an evolved Multimedia Broadcast/Multicast Service (eMBMS) and a method of providing the eMBMS by the electronic device.

### BACKGROUND

An evolved Multimedia Broadcast/Multicast Service (eMBMS) is a service of broadcasting or multicasting data to a plurality of users through a wireless network. The eMBMS supports a real time streaming service, a still image service, a file download service, and the like. The eMBMS can change operations thereof depending on the time zone. The eMBMS may operate locally or nationally. The eMBMS may be provided through mobile devices, such as smart phones, or the like.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide an electronic device and a method for allowing a user to recognize whether the user can receive an evolved multimedia broadcast/multicast service (eMBMS) even though the user does not execute an application related to the eMBMS.

eMBMSes provided to users through electronic devices may vary depending on time zones or regions. For example, even though the user desires to receive the eMBMS, the user may not receive the eMBMS.

The user may receive the eMBMS by executing an application related to the eMBMS of an electronic device. However, the user may not receive the eMBMS according to locations or time zones although the application related to the eMBMS is being executed.

In accordance with an aspect of the present disclosure, a method for providing content by an electronic device is provided. The method includes receiving, from a base station, messages related to one or more content providing services which can be received in a service available area of the base station; acquiring, from the messages, service information on the one or more content providing service which can be used by the electronic device from among the one or more content providing services; and notifying a user of the service information by changing and displaying icons corresponding to the one or more content providing services according to the service information.

In accordance with another aspect of the present disclosure, an electronic device for providing content is provided. The electronic device includes a display; a communication interface configured to receive, from a base station, messages related to one or more content providing services which can be received in a service available area of the base station; and an eMBMS module configured to: acquire, from the messages, service information on a content providing service which can be used by the electronic device among the one or more content providing services, and notify a user of the service information by changing and displaying icons corresponding to the one or more content providing services according to the service information.

According to various embodiments of the present disclosure, an electronic device for providing an eMBMS to a user and a method of providing the eMBMS by the electronic device are provided.

According to various embodiments of the present disclosure, although a user who uses an electronic device according to an embodiment of the present disclosure does not execute an application related to the eMBMS, the user can recognize whether the user can receive the eMBMS.

According to various embodiments of the present disclosure, a user can recognize the number of broadcasting channels which the user can receive in a corresponding position of an electronic device by displaying the number of broadcasting channels through which broadcasting data is broadcasted in an eMBMS which can be provided to the user in a position adjacent to an execution icon for executing an eMBMS application although the user does not execute the eMBMS application.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to various embodiments of the present disclosure;
FIG. 2 is a block diagram of an evolved multimedia broadcast/multicast service (eMBMS) module in an electronic device according to various embodiments of the present disclosure;
FIG. 3A is a flowchart illustrating a method of providing an eMBMS by an electronic device according to various embodiments of the present disclosure;
FIG. 3B is a flowchart illustrating a method of providing an eMBMS by an electronic device according to various embodiments of the present disclosure;
FIG. 3C is a flowchart illustrating a method of providing an eMBMS by an electronic device according to various embodiments of the present disclosure;
FIG. 4 is a flowchart illustrating a method of providing an eMBMS by an electronic device according to various embodiments of the present disclosure;
FIG. 5A illustrates an electronic device providing eMBMS-related data to another electronic device connected to the electronic device according to various embodiments of the present disclosure;
FIG. 5B is a flow diagram illustrating electronic devices receiving an eMBMS according to various embodiments of the present disclosure;
FIG. 6A illustrates an electronic device providing an eMBMS according to various embodiments of the present disclosure;
FIG. 6B illustrates an electronic device providing an eMBMS according to various embodiments of the present disclosure;
FIG. 7 illustrates an electronic device providing an eMBMS according to various embodiments of the present disclosure;
FIG. 8 is a block diagram of an electronic device according to various embodiments of the present disclosure; and
FIG. 9 illustrates communication protocols among a plurality of electronic devices according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The term "include" or "may include" refers to the existence of a corresponding disclosed function, operation or component which can be used in various embodiments of the present disclosure and does not limit one or more additional functions, operations, or components. In embodiment of the present disclosure, the terms, such as "include" or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

The term "or" used in various embodiments of the present disclosure includes any or all of combinations of listed words. For example, the expression "A or B" may include A, may include B, or may include both A and B.

The expression "1", "2", "first", or "second" used in various embodiments of the present disclosure may modify various components of various embodiments but does not limit the corresponding components. For example, the above expressions do not limit the sequence and/or importance of the corresponding elements. The expressions may be used to distinguish a component element from another component element. For example, a first user device and a second user device indicate different user devices although both of them are user devices. For example, without departing from the scope of the present disclosure, a first component element may be named a second component element. Similarly, the second component element also may be named the first component element.

It should be noted that if it is described that one component element is "coupled" or "connected" to another component element, the first component element may be directly coupled or connected to the second component, and a third component element may be "coupled" or "connected" between the first and second component elements. Conversely, when one component element is "directly coupled" or "directly connected" to another component element, it may be construed that a third component element does not exist between the first component element and the second component element.

In embodiment of the present disclosure, the terms are used to describe a specific embodiment of the present disclosure, and are not intended to limit the present disclosure. As used herein, the singular forms are intended to include the plural forms as well, unless the context clearly indicates otherwise.

Unless defined differently, all terms used herein, which include technical terminologies or scientific terminologies, have the same meaning as a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present disclosure.

Electronic devices according to various embodiments of the present disclosure may be devices adopting a communication function. For example, the electronic devices may include at least one of smart phones, tablet personal computers (PCs), mobile phones, video phones, e-book readers, desktop PCs, laptop PCs, netbook computers, personal digital assistants (PDAs), portable multimedia players (PMPs), Motion Picture Experts Group (MPEG-1 or MPEG-2) Audio Layer 3 (MP3) players, mobile medical devices, cameras, wearable devices (for example, head-mounted-devices (HMDs), such as electronic glasses), electronic clothes, electronic bracelets, electronic necklaces, electronic appcessories, electronic tattoos, smart watches, and the like.

According to an embodiment of the present disclosure, an electronic device may be a smart home appliance with a communication function. The smart home appliance as an example of the electronic device may include at least one of, for example, a television, a Digital Video Disc (DVD) player, an audio system, a refrigerator, an air conditioner, a vacuum cleaner, an oven, a microwave oven, a washing machine, an air cleaner, a set-top box, a TV box (for example, Samsung HomeSync™, Apple TV™, or Google TV™), a game console, an electronic dictionary, an electronic key, a camcorder, and an electronic picture frame.

According to various embodiments of the present disclosure, the electronic device may include at least one of various medical appliances (for example, magnetic resonance angiography (MRA), magnetic resonance imaging (MRI), computed tomography (CT), and ultrasonic machines), navigation equipment, a global positioning system (GPS) receiver, an event data recorder (EDR), a flight data recorder (FDR), automotive infotainment device, electronic equipment for ships (for example, ship navigation equipment and a gyrocompass), avionics, security equipment, a vehicle head unit, an industrial or home robot, an automatic teller machine (ATM) of a banking system, and a point of sales (POS) of a shop.

According to an embodiment of the present disclosure, the electronic devices may include at least one of furniture or a part of a building/structure having a communication function, electronic boards, electronic signature receiving devices, projectors, or various measuring equipment (for example, equipment for a water supply, an electricity, gases or radio waves). An electronic device according to various embodiments of the present disclosure may be a combination of one or more of above described various devices. In addition, an electronic device according to various embodiments of the present disclosure may be a flexible device. In addition, an electronic device according to various embodiments of the present disclosure is not limited to the above described devices.

Hereinafter, an electronic device according to various embodiments of the present disclosure will be described with reference to the accompanying drawings. In various embodiments of the present disclosure, the term "user" may indicate a person using an electronic device or a device (for example, an artificial intelligence electronic device) using an electronic device.

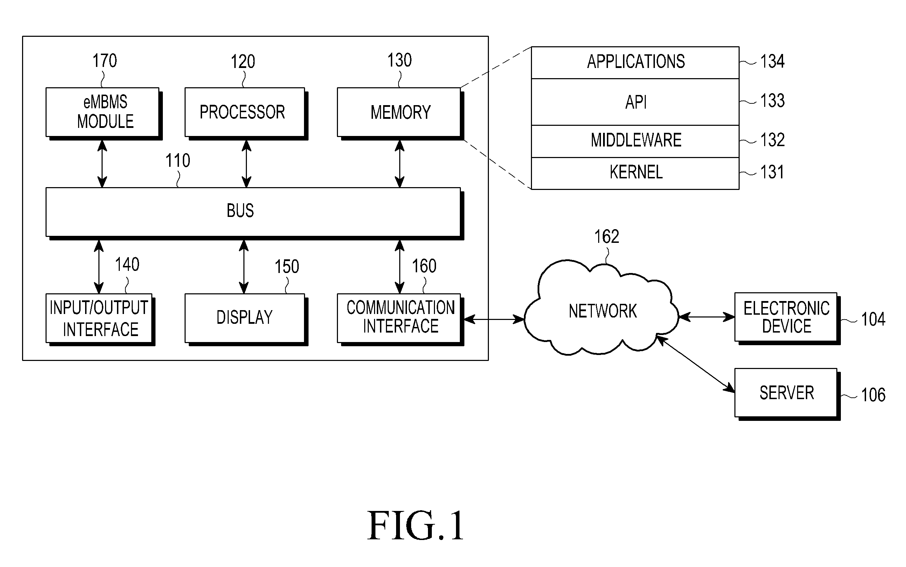

FIG. 1 illustrates a network environment including an electronic device according to various embodiments of the present disclosure.

Referring to FIG. 1, an electronic device 101 may include a bus 110, a processor 120, a memory 130, an input/output interface 140, a display 150, a communication interface 160, and an evolved multimedia broadcast/multicast service (eMBMS) module 170.

The bus 110 may be a circuit to connect the above-described component elements with each other and to transfer communication (for example, control messages) among the above-described component elements.

The processor 120 may receive instructions from the above-described component elements (for example, the memory 130, the input/output interface 140, the display 150, the communication interface 160, the eMBMS module 170 and the like) through, for example, the bus 110, then decode the received instructions and perform calculation or data processing according to the decoded instructions.

The memory 130 may store instructions or data received from the processor 120 or other component elements (for example, the input/output interface 140, the display 150, the communication interface 160, the eMBMS module 170 and the like) or generated by the processor 120 or other component elements. The memory 130 may include programming modules for example, a kernel 131, a middleware 132, an Application Programming Interface (API) 133, applications 134, or the like. Each of the programming modules described above may be formed of software, firmware, and hardware, or a combination thereof.

Broadcast data provided by the service provider (for example, a broadcasting station, a base station, a broadcasting server, an Electronic Program Guide (EPG) service or the like) may be provided to the memory 130. The memory may store eMBMS scheduling information received from the service provider. The broadcasting data may be broadcasting data provided by, for example, DMB, IPTV, DVB or the like.

The kernel 131 may control or manage system resources (for example, the bus 110, the processor 120, the memory 130 or the like) which are used for performing operations or functions implemented by other programming modules, for example, the middleware 132, the API 133 or the applications 134. Furthermore, the kernel 131 may provide an interface through which the middleware 132, the API 133, and the applications 134 may access individual component elements of the electronic device 101 to control or manage them.

The middleware 132 may serve as an intermediary such that the API 133 or the applications 134 communicate with the kernel 131 to transmit/receive data. Further, in relation to requests for operations received from the applications 134, the middleware 132 may control (for example, scheduling or load-balancing) the requests using, for example, a method of determining sequence for using system resources (for example, the bus 110, the processor 120, the memory 130, or the like) of the electronic device 101 with respect to at least one application among the applications 134.

The API 133 is an interface by which the applications 134 control functions provided from the kernel 131 or the middleware 132, and may include, for example, at least one interface or function (for example, instructions) for file control, window control, image processing, text control, or the like.

According to the various embodiments of the present disclosure, the applications 134 may include a Short Message Service (SMS)/Multimedia Message Service (MMS) application, an e-mail application, a calendar application, an alarm application, a health care application (for example, an application for measuring a work rate or a blood sugar), an environment information application (for example, an application for providing atmospheric pressure, humidity, or temperature information). Additionally or alternatively, the applications 134 may be an application related to the exchange of information between the electronic device 101 and external electronic devices (for example, another electronic device 104). The application related to the information exchange may include, for example, a notification relay application for transmitting specific information to the external electronic device, or a device management application for managing the external electronic device.

For example, the notification relay application may include a function of transferring notification information generated in other applications (for example, the SMS/MMS application, the e-mail application, the health care application, or the environmental information application) of the electronic device 101 to an external electronic device (for example, the other electronic device 104). Additionally or alternatively, the notification relay application may receive notification information from, for example, an external electronic device (for example, the other electronic device 104) and provide the same to a user. The device management application, for example, may manage (for example, install, delete, or update) at least some functions (for example, turning an external electronic device (or some elements) on or off or adjusting the brightness (or resolution) of a display) of an external electronic device (for example, the other electronic device 104) that communicates with the electronic device 101, applications performed in the external electronic device, or services (for example, a phone call service, or a messaging service) provided in the external electronic device.

According to various embodiments of the present disclosure, the applications 134 may include applications, which are designated according to the property (for example, the type of electronic device) of the external electronic device (for example, the other electronic device 104). For example, when the external electronic device is an MP3 player, the applications 134 may include an application related to the reproduction of music. Similarly, when the external electronic device is a mobile medical device, the applications 134 may include an application related to health care. According to an embodiment of the present disclosure, the applications 134 may include at least one of applications designated in the electronic device 101 or applications received from an external electronic device (for example, a server 106 or the other electronic device 104).

The input/output interface 140 may transfer instructions or data input by a user through an input/output device (for example, a sensor, a keyboard, or a touch screen) to the processor 120, the memory 130, the communication interface 160, or the eMBMS module 170 through, for example, the bus 110. For example, the input/output interface 140 may provide, to the processor 120, data for a user's touch which is input through the touch screen. The input/output interface 140 may output the instructions or data received through, for example, the bus 110, from the processor 120, the memory 130, the communication interface 160, or the eMBMS module 170 through the input/output device (for example, speaker or display). For example, the input/output interface 140 may output voice data processed by the processor 120 to the user through the speaker.

The display 150 may display various pieces of information (for example, multimedia data or text data) for the user.

The communication interface 160 may connect communication between the electronic device 101 and the external device (for example, the other electronic device 104 or the server 106). For example, the communication interface 160 may be connected with a network 162 through wireless communication or wired communication to communicate with the external electronic device. The wireless communication may include at least one of, for example, Wi-Fi, Bluetooth (BT), Near Field Communication (NFC), GPS and cellular communication (for example, LTE, LTE-A, CDMA, WCDMA, UMTS, WiBro, GSM or the like). The wired communication may include at least one of, for example, a Universal Serial Bus (USB), a High Definition Multimedia Interface (HDMI), Recommended Standard 232 (RS-232), and a Plain Old Telephone Service (POTS).

The communication interface 160 may receive eMBMS data from a device, such as a service provider (for example, a broadcasting station, a base station, a broadcasting server, an EPG, the server 106, or the like) providing an eMBMS to the electronic device 101. The communication interface 160 may receive eMBMS data from, for example, the other electronic device 104 and the server 106. Further, the communication interface 160 may transmit eMBMS data to the other electronic device 104 to allow the user to receive the eMBMS hrough the other electronic device 104.

According to an embodiment of the present disclosure, the network 162 may be a telecommunication network. The communication network may include at least one of a computer network, the Internet, the Internet of things, and a telephone network. According to an embodiment of the present disclosure, a protocol (for example, a transport lay protocol, data link layer protocol, or a physical layer protocol) for communication between the electronic device 101 and the external device may be supported in at least one of the applications 134, the application programming interface 133, the middleware 132, the kernel 131, and the communication interface 160.

The eMBMS module 170 may control the communication interface 160 to allow the electronic device 101 to receive service information on one or more content providing services transmitted or broadcasted from a service provider (for example, an evolved NodeB (eNB), the server 106, or the like) providing the eMBMS, for example, eMBMS scheduling information. According to an embodiment of the present disclosure, the service information may be included in a message transmitted from the service provider. The eMBMS module 170 may acquire (or extract) service information from the message. The service information may be information (for example, eMBMS scheduling information) indicating a content providing service which can be used by the electronic device 101 among the one or more content providing services provided from the service provider. The eMBMS module 170 may inform the user that there is an available content providing service by displaying the service information on the display 150.

When the service information, for example, the eMBMS scheduling information is received, the eMBMS module 170 may analyze the eMBMS scheduling information to detect a broadcasting schedule of broadcasting data (video data, audio data or the like) provided as the eMBMS from the service provider. The eMBMS module 170 may determine a broadcasting channel which can be provided to the electronic device 101, that is, a broadcasting channel which the user using the electronic device 101 can view or listen to, based on the broadcasting schedule. Further, the eMBMS module 170 may control the display 150 to display the number of broadcasting channels which can be provided to the electronic device 101 in a position adjacent to an execution icon corresponding to an application (an eMBMS application) related to the eMBMS. According to an embodiment of the present disclosure, the eMBMS module 170 may display, as the service information, the number of broadcasting channel, or images or channel numbers corresponding to the broadcasting channels in another position different from the position of the execution icon. For example, the service information may be displayed in a popup window adjacent to the execution icon. Further, the eMBMS module 170 may notify the user of the service information by controlling the electronic device 101 to output a sound or vibration related to the service information.

The eMBMS module 170 may process at least some of information acquired from other components (for example, the processor 120, the memory 130, the input/output interface 140, or the communication interface 160), and may provide the processed information to the user through various methods. For example, the eMBMS module 170 may control at least some functions of the electronic device 101 such that the electronic device 101 may interwork with other electronic devices (for example, the other electronic device 104 or the server 106) by using the processor 120 or independently therefrom.

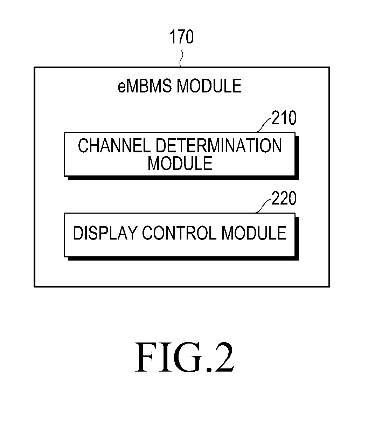

Hereinafter, additional information on the eMBMS module 170 will be provided with reference to FIGS. 2, 3A, 3B, 3C, 4, 5A, 5B, 6A, 6B, and 7.

An electronic device for providing a content providing service according to various embodiments of the present disclosure may include a display, an interface that receives, from an eNB, messages related to one or more content providing services which can be received in a service available area of the eNB, and an eMBMS module that acquires service information on an available content providing service among the one or more content providing services from the messages, and changes and displays, on the display, icons corresponding to the one or more content providing services according to the service information so as to notify the user of the service information.

An electronic device for providing an eMBMS according to an embodiment of the present disclosure may include a communication interface that receives eMBMS scheduling information, an eMBMS module that determines available broadcasting channels based on the eMBMS scheduling information, and a display that displays the number of broadcasting channels adjacently to an execution icon related to the eMBMS.

FIG. 2 is a block diagram of an eMBMS module in an electronic device according to various embodiments of the present disclosure.

Referring to FIG. 2, an eMBMS module 170 may include one or more of a channel determination module 210 and a display control module 220.

The channel determination module 210 may determine the number of broadcasting channels transmitting broadcasting data in an eMBMS which can be provided to the user through an analysis of eMBMS scheduling information received through the communication interface 160. For example, the channel determination module 210 may analyze eMBMS scheduling information received from an eNB through the network 162 to realize that the number of broadcasting channels which can be received from the eNB is four. According to an embodiment of the present disclosure, the eMBMS scheduling information may include scheduling information on a broadcasting channel through which broadcasts from one or more broadcasting stations or service providers are broadcasted in the eMBMS.

The display control module 220 may control the display 150 to display the number of broadcasting channels which can be provided through the electronic device 101. For example, it is assumed that an icon for executing an application for watching broadcasting is displayed on a home screen of the electronic device 101 and the number of broadcasting channels which can be provided from the eNB is four. The display control module 220 may inform the user that the user can receive four broadcasting channels by controlling the display 150 to display "4" in a position adjacent to the execution icon.

In accordance with another aspect of the present disclosure, an electronic device for providing content is provided. The electronic device includes a display; a communication interface configured to receive, from a base station, messages related to one or more content providing services which can be received in a service available area of the base station; and an eMBMS module configured to: acquire, from the messages, service information on a content providing service which can be used by the electronic device among the one or more content providing services, and notify a user of the service information by changing and displaying icons corresponding to the one or more content providing services according to the service information.

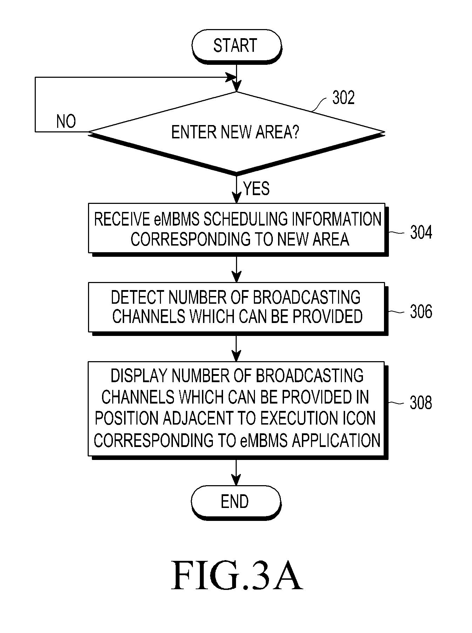

FIG. 3A is a flowchart illustrating a method of providing an eMBMS by an electronic device according to various embodiments of the present disclosure.

Referring to FIG. 3A, the eMBMS module 170 of the electronic device 101 may determine whether the electronic device 101 enters a new area in operation 302. The new area may include, for example, a new cell, a new multi-broadcast single-frequency network (MBSFN) area, a Point of Interest (POI), a geo-fence or the like.

When the electronic device 101 enters the new area based on a result of the determination in operation 302-Yes, the communication interface 160 of the electronic device 101 may receive eMBMS scheduling information corresponding to the new area from the corresponding eNB in operation 304. The eMBMS module 170 may detect the number of broadcasting channels which can be provided in the new area based on the eMBMS scheduling information in operation 306. According to an embodiment of the present disclosure, the eMBMS module 170 may determine one or more broadcasting channels (for example, multimedia broadcasting, audio broadcasting or the like) through which the electronic device 101 can receive data (for example, broadcasting data or the like) in the new area based on the eMBMS scheduling information. The number of determined broadcasting channels may be the number of broadcasting channels which the electronic device 101 can receive in operation 306.

The eMBMS module 170 may display the number of broadcasting channels adjacently to an execution icon corresponding to an eMBMS application by controlling the display 150 in operation 308.

When the electronic device 101 does not enter the new area based on a result of the determination in operation 302-No, the eMBMS module 170 may not perform an operation of receiving the eMBMS scheduling information from the eNB until the electronic device 101 enters the new area.

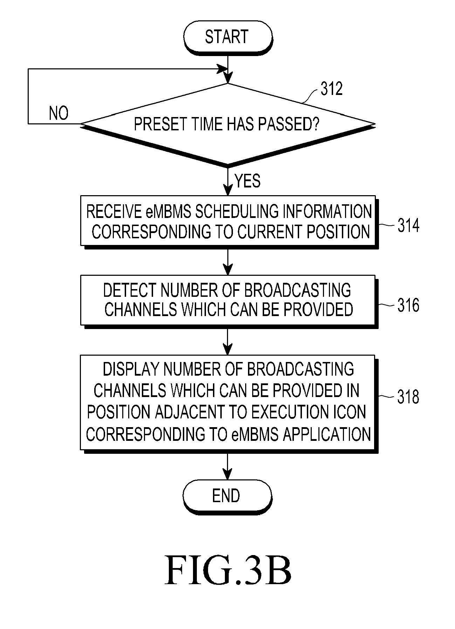

FIG. 3B is a flowchart illustrating a method of providing an eMBMS by an electronic device according to various embodiments of the present disclosure.

Referring to FIG. 3B, the eMBMS module 170 of the electronic device 101 may determine whether a preset time (for example, 5 minutes) has passed from a time when the eMBMS was previously received in operation 312.

When the preset time has passed from the time when the eMBMS scheduling information was previously received based on a result of the determination in operation 312-Yes, the communication interface 160 of the electronic device 101 may receive eMBMS scheduling information of a current position of the electronic device 101 in operation 314. When an area in which the electronic device 101 is located becomes different from that when the eMBMS scheduling information was previously received (for example, when a cell in which the electronic device 101 is located changes), the electronic device 101 may receive new eMBMS scheduling information from a new eNB. In contrast, when the area in which the electronic device 101 is located is the same as that when the eMBMS scheduling information was previously received, the electronic device 101 may receive eMBMS scheduling information again from the eNB from which the electronic device 101 previously received the eMBMS scheduling information.

The eMBMS module 170 may detect the number of broadcasting channels which can be provided based on the eMBMS scheduling information in operation 316. According to an embodiment of the present disclosure, the eMBMS module 170 may determine one or more broadcasting channels (for example, multimedia broadcasting, audio broadcasting or the like) through which the electronic device 101 can receive data (for example, broadcasting data or the like) based on the eMBMS scheduling information. The number of determined broadcasting channels may be the number of broadcasting channels which the electronic device 101 can receive in operation 306.

The eMBMS module 170 may display the number of broadcasting channels adjacently to an execution icon corresponding to an eMBMS application by controlling the display 150 in operation 318.

When the preset time has not passed from the time when the eMBMS scheduling information was previously received based on a result of the determination in operation 312, the eMBMS module 170 may control the electronic device 101 to wait until the preset time arrives.

Through the processes described in FIG. 3B, the electronic device 101 may receive eMBMS scheduling information from the eNB at every preset time (for example, every 3, 5, 10, or 30 minutes), that is, on a certain cycle.

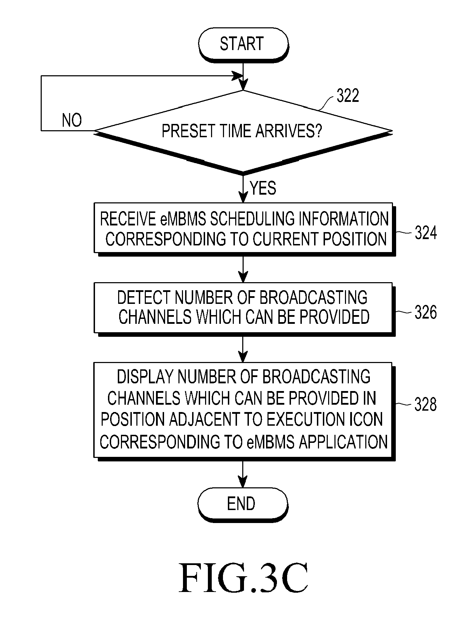

FIG. 3C is a flowchart illustrating a method of providing an eMBMS by an electronic device according to various embodiments of the present disclosure.

Referring to FIG. 3C, the eMBMS module 170 of the electronic device 101 may determine whether a preset time (for example, 13:05) arrives.

When the preset time arrives based on a result of the determination in operation 322-Yes, the communication interface 160 of the electronic device 101 may receive eMBMS scheduling information of a current position of the electronic device 101 in operation 324. In contrast, when an area in which the electronic device 101 is located becomes different from that when the eMBMS scheduling information was previously received, the electronic device 101 may receive new eMBMS scheduling information from a new eNB. In contrast, when the area in which the electronic device 101 is located is the same as that when the eMBMS scheduling information was previously received, the electronic device 101 may receive eMBMS scheduling information again from the eNB from which the electronic device 101 previously received the eMBMS scheduling information.

The eMBMS module 170 may detect the number of broadcasting channels which can be provided based on the eMBMS scheduling information in operation 326. According to an embodiment of the present disclosure, the eMBMS module 170 may determine one or more broadcasting channels (for example, multimedia broadcasting, audio broadcasting or the like) through which the electronic device 101 can receive data (for example, broadcasting data or the like) based on the eMBMS scheduling information. The number of determined broadcasting channels may be the number of broadcasting channels which the electronic device 101 can receive in operation 326.

The eMBMS module 170 may display the number of broadcasting channels adjacently to an execution icon corresponding to an eMBMS application by controlling the display 150 in operation 328.

When the preset time does not arrive based on a result of the determination of operation S322-No, the eMBMS module 170 may control the electronic device 101 to wait until the preset time arrives.

An electronic device for providing an eMBMS according to an embodiment of the present disclosure may include a communication interface that receives eMBMS scheduling information, an eMBMS module that determines available broadcasting channels based on the eMBMS scheduling information, and a display that displays the number of broadcasting channels adjacently to an execution icon related to the eMBMS.

A method of providing a content providing service by an electronic device according to various embodiments of the present disclosure may include an operation for receiving, from an eNB, messages related to one or more content providing services which can be received in a service available area of the eNB, and an operations for acquiring service information on an available content providing service among the one or more content providing services from the messages and changes and displays, on the display, icons corresponding to the one or more content providing services according to the service information so as to notify the service information to the user.

A method of providing an eMBMS by an electronic device according to various embodiments of the present disclosure may include an operation for receiving eMBMS scheduling information from an eNB, an operation for determining available broadcasting channels based on the eMBMS scheduling information, and an operation for displaying the number of broadcasting channels adjacently to an execution icon related to the eMBMS.

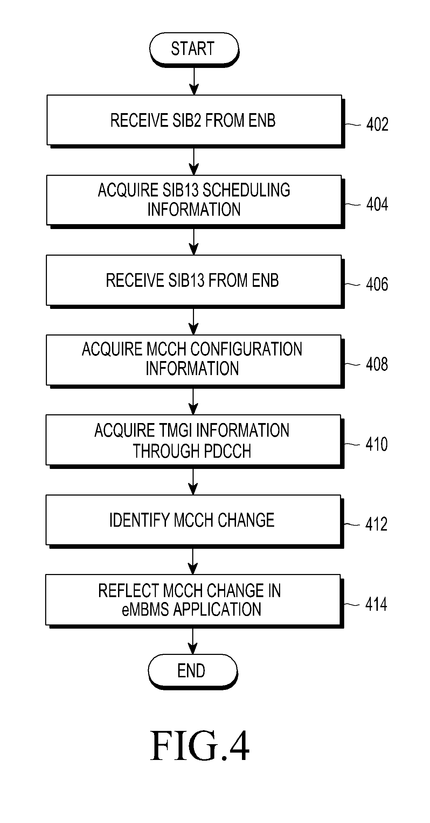

FIG. 4 is a flowchart illustrating a method of providing an eMBMS by an electronic device according to various embodiments of the present disclosure.

Referring to FIG. 4, the electronic device 101 may receive System Information Block (SIB) 2 in operation 402. The eMBMS module 170 of the electronic device 101 may acquire SIB 13 scheduling information from SIB2 in operation 404.

An MBSFN subframe configuration list (MBSFN-SubframeConfigList IE) of SIB2 may include subframes which can be used for MBSFN transmission. The MBSFN subframe configuration list may include an MBSFN-Subframe IE, which may indicate a subframe corresponding to the MBSFN subframe and a radio frame including the subframe. Table 1 below is an example of a configuration table of the MBSFN subframe configuration list.

**Table 1**

| |
|---|
| ```
                                -- ASN1START
                     MBSFN-SubframeConfig ::=SEQUENCE {
         radioframeAllocationPeriodENUMERATED {n1, n2, n4, n8, n16, n32},
                    radioframeAllocationOffsetINTEGER (0..7),
                          subframeAllocationCHOICE {
                             oneFrameBIT STRING
                                  (SIZE(6)),
                            fourFramesBIT STRING
                                  (SIZE(24))
                                      }
                                      }
                                 -- ASN1STOP
``` |

Referring to Table 1, a radio frame allocation period (radioFrameAllocationPeriod) and a radio frame allocation offset (radioFrameAllocationOffset) may be used for indicating a radio frame having an MBSFN subframe. Further, the radio frame allocation period and the radio frame allocation offset may have an MBSFN subframe as a radio frame which meets an equation of "SFNmod radioFrameAllocationPeriod = radioFrameAllocationOffset". The single frequency network (SFN) corresponds to a system frame number and may include a radio frame number. The SFN may range from 0 to 1023 and may be repeated. Subframe allocation (subframeAllocation) may indicate a subframe which corresponds to the MBSFN subframe within a radio frame indicated by the equation of "SFNmod radioFrameAllocationPeriod = radioFrameAllocationOffset". The MBSFN subframe may be expressed in the unit of one radio frame or four radio frames.

When the MBSFN subframe is expressed in the unit of one radio frame, a subframe corresponding to the MBSFN subframe may be indicated in oneFrame IE. The MBSFN subframe may exist in first, second, third, sixth, seventh, and eighth subframes among ten subframes within one radio frame. Accordingly, the oneFrame IE may use 6 bits to indicate the MBSFN subframe among the listed subframes. When the MBSFN subframe is expressed in the unit of four radio frames, a subframe corresponding to the MBSFN subframe may be indicated in fourFrame IE. According to an embodiment of the present disclosure, the oneFrame IE may use a total of 24 bits to cover four radio frames and indicate the MBSFN subframe among the listed subframes in every radio frame. Accordingly, the eMBMS module 170 of the electronic device 101 may accurately recognize a subframe which can become the MBSFN subframe by using the MBSFN subframe configuration list.

The electronic device 101 may receive SIB 13 from the eNB in operation 406. When the electronic device 101 desires to receive MBSFN, the electronic device 101 may receive SIB13 from the eNB. An MBSFN area information list (MBSFN-AreaInfoList IE) of SIB 13 may include information on a position in which a MCCH per MBSFN area provided by a corresponding area (for example, cell). The eMBMS module 170 may receive the MCCH by using the position information.

The electronic device 101 may acquire Multicast Control CHannel (MCCH) configuration information in operation 408. According to one embodiment of the present disclosure, a position of a resource used for MBSFN transmission is indicated in a MBSFN area configuration (MBSFNAreaConfiguration IE) of the MCCH, and the electronic device 101 may receive the MBSFN subframe by using the MBSFN area configuration information. The electronic device 101 may acquire a position of the MBSFN subframe, through which the MTCH is transmitted, desired by an MCH scheduling information MAC Control Element (CE) which is one of the MAC CEs of the received MAC PDU. The eMBMS module 170 of the electronic device 101 may decode the desired MTCH by using MCH scheduling information.

The electronic device 101 may acquire Temporary Mobile Group Identify (TMGI) information through a Physical Downlink Control Channel (PDCCH) in operation 410. The electronic device 101 may identify a change in the MCCH based on the TMGI information in operation 412.

For example, the eMBMS module 170 of the electronic device 101 may detect, as the change in the MCCH, a change in at least one of a radio frame allocation period (Radioframe Allocation Period), radio frame allocation offset (Radioframe Allocation Offset), subframe allocation (Subframe Allocation), subframe allocation end (Subframe Allocation End), dataMCS, MCH scheduling period (MCH-Scheduling Period), service ID (ServiceID), and logical channel ID (LogicalChannel Identify) in operation 412.

When the change in the MCCH is identified, the eMBMS module 170 of the electronic device 101 may reflect the change in the MCCH in an eMBMS application in operation 414. The eMBMS module 170 may control the display 150 to display the number of broadcasting channels which can be viewed (or listened to) from the eNB in a position adjacent to the eMBMS application in operation 414.

In accordance with an aspect of the present disclosure, a method for providing content by an electronic device is provided. The method includes receiving, from a base station, messages related to one or more content providing services which can be received in a service available area of the base station; acquiring, from the messages, service information on the one or more content providing service which can be used by the electronic device from among the one or more content providing services; and notifying a user of the service information by changing and displaying icons corresponding to the one or more content providing services according to the service information.

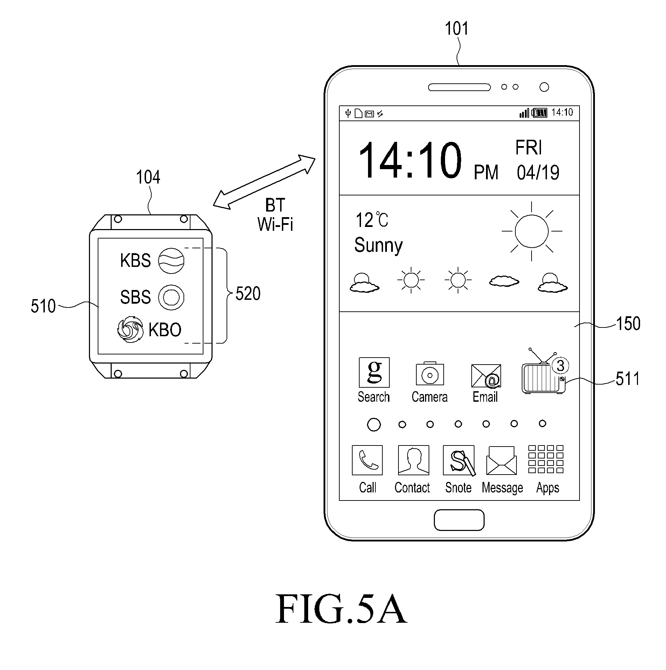

FIG. 5A illustrates an electronic device providing eMBMS-related data to another electronic device connected to the electronic device according to various embodiments of the present disclosure.

The electronic device 101 may be connected to the other electronic device 104 through the network 162. The electronic devices 101 and 104 connected to each other may transmit/receive data through the network 162.

Referring to FIG. 5A, the electronic device 101 may transmit data to the other electronic device 104 or control the other electronic device 104. For example, the eMBMS module 170 of the electronic device 101 may control the communication interface 160 to transmit data (for example, broadcasting data, broadcasting schedule data, or data indicating whether the eMBMS is possible) received from the eNB or service provider through the network 162 to the other electronic device 104. At this time, the eMBMS module 170 may control the communication interface 160 to transmit a control signal (for example, a control command) for controlling the other electronic device 104 to display the data transmitted to the other electronic device 104. Further, the eMBMS module 170 of the electronic device 101 may control the communication interface 160 to transmit a control signal to display the number of broadcasting channels which can be provided to the user on a display 510 of the other electronic device 104.

The electronic device 101 may provide the user with a list of eMBMS-related data which can be provided. Further, the other electronic device 104 may receive the list from the electronic device 101 and display the received list.

Referring to FIG. 5A, the other electronic device 104 may display a screen in which broadcasting channels 520 which can be provided to the user. The user may select one of the broadcasting channels 520 displayed on the screen to make a request for broadcasting data of the corresponding broadcasting channel.

The display 510 of the other electronic device 104 may display the number of broadcasting channels which can be provided to the user in a position adjacent to an execution icon corresponding to the eMBMS application according to the control signal transmitted from the electronic device 101 through the network 162. When a user input for executing a short-cut icon corresponding to the eMBMS application displayed on the display 510 is input, the display 510 may display information on data which can be provided, for example, channel information.

Referring to FIG. 5A, the display 510 of the other electronic device 104 may display three channels as the broadcasting channels which can be provided to the user. Referring to FIG. 5A, the display 510 may display "③" in a position adjacent to an execution icon 511 corresponding to the eMBMS application to indicate that three broadcasting channels can be provided.

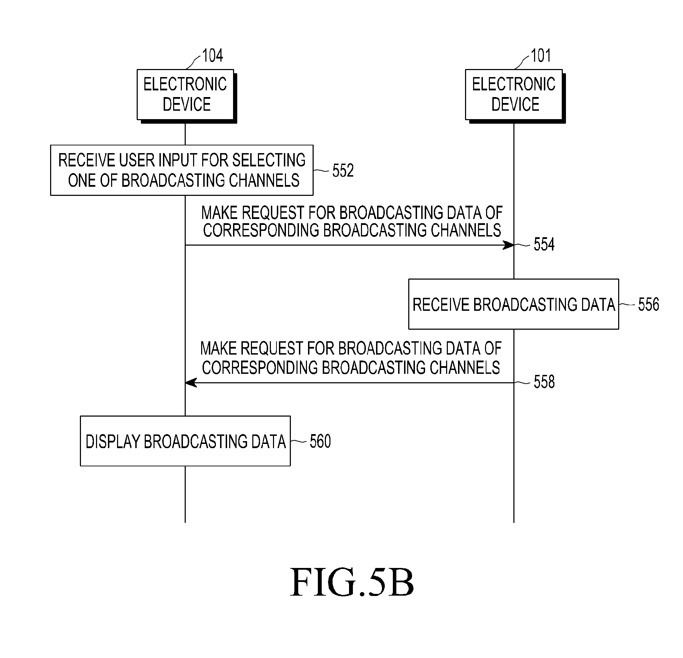

FIG. 5B is a flow diagram illustrating electronic devices receiving an eMBMS according to various embodiments of the present disclosure. For convenience of description, the electronic devices 101 and 104 illustrated in FIG. 5A will be described as examples.

Referring to FIGS. 5A and 5B, the display 510 of the other electronic device 104 may receive a user input for selecting one of the broadcasting channels displayed on the display 510 in operation 552. The other electronic device 104 may make a request for broadcasting data of the broadcasting channel selected in operation 554 to the electronic device 101.

The electronic device 101 may receive the broadcasting data corresponding to the broadcasting channel selected by the user in operation 556. The electronic device 101 may transmit the broadcasting data received in operation 556 to the other electronic device 104 in operation 558. According to one embodiment of the present disclosure, operations 556 and 558 may be simultaneously performed. For example, the electronic device 101 may transmit broadcasting data to the other electronic device 104 in real time.

The other electronic device 104 may display the broadcasting data received from the electronic device 101 on the display 510 in operation 560. At this time, the other electronic device 104 may display the broadcasting data received from the electronic device 101 on the display 510. According to one embodiment of the present disclosure, similar to the other electronic device 104, the electronic device 101 may display the broadcasting data on the display 150.

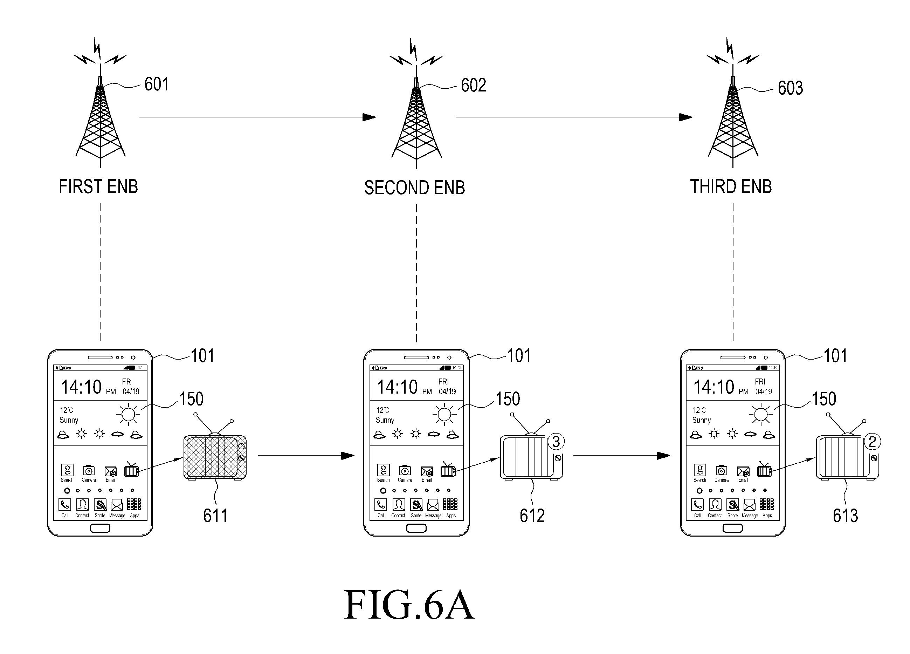

FIG. 6A illustrates an electronic device providing an eMBMS according to various embodiments of the present disclosure.

Referring to FIG. 6A, it is assumed that the electronic device 101 sequentially moves to an area (first area) corresponding to a first eNB 601, an area (second area) corresponding to a second eNB 602, and an area (third area) corresponding to a third eNB 603.

The first eNB 601, the second eNB 602, and the third eNB 603 may provide different eMBMSes to the electronic device 101. Accordingly, whenever the electronic device 101 enters each of the first area, the second area, and the third area, the electronic device 101 may analyze eMBMS scheduling information received from each of the first to third eNBs 601, 602, and 603 to determine an eMBMS (for example, broadcasting data) which can be provided from each of the first to third eNBs 601, 602, and 603.

Referring to FIG. 6A, the eMBMS module 170 of the electronic device 101 may control the display 150 to display the number of broadcasting channels which can be provided from each of the first to third eNBs 601, 602, and 603. Accordingly, the display 150 of the electronic device 101 may display the number of broadcasting channels which the user can use in the first area, the number of broadcasting channels which the user can use in the second area, and the number of broadcasting channels which the user can use in the third area.

Referring to FIG. 6A, there is no broadcasting channel which the user can use in the first area, and accordingly, the display 150 displays no number in a position adjacent to an execution icon 611 under a control of the eMBMS module 170. When there is no available broadcasting channel, the eMBMS module 170 may control the display 150 to display the execution icon 611 corresponding to the eMBMS application in black and white as illustrated in FIG. 6A.

Referring to FIG. 6A, the number of broadcasting channels which the user can use in the second area is three, and accordingly, the display 150 displays may display "3" in a position adjacent to an execution icon 612 under a control of the eMBMS module 170. At this time, when a user input for selecting the execution icon 612 to execute the eMBMS application is received from the user, the eMBMS module 170 may control the display 150 to display a list of the three broadcasting channels.

The number of broadcasting channels which the user can use in the third area is two, and accordingly, the display 150 displays may display "2" in a position adjacent to an execution icon 613 under a control of the eMBMS module 170. At this time, when a user input for selecting the execution icon 613 is received from the user, the eMBMS module 170 may control the display 150 to display a list of the two broadcasting channels.

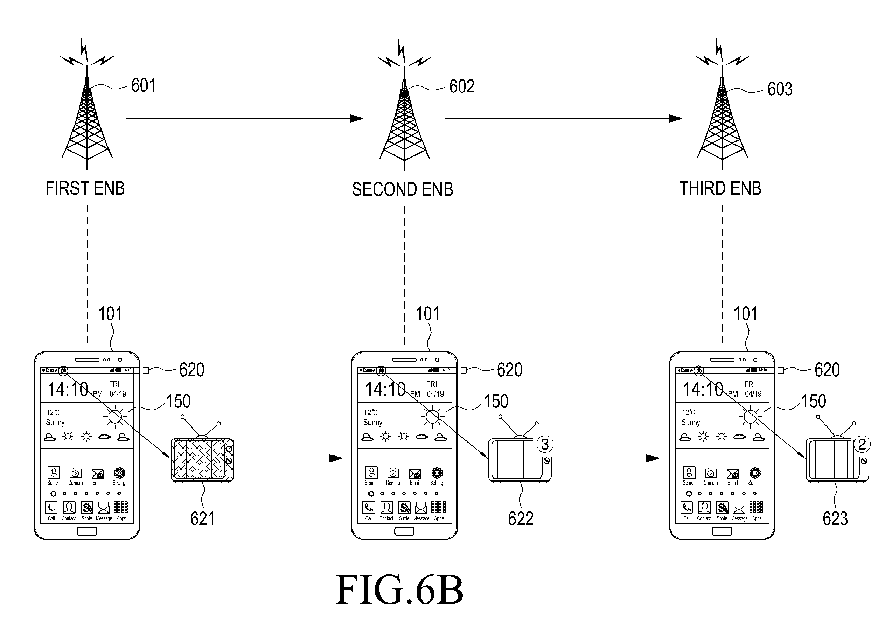

Although FIGS. 6A and 6B illustrate that the number of broadcasting channels which can be used by the user is displayed in an adjacent position of the execution icon 612 of the background screen of the electronic device 101, the number of broadcasting channels which can be used by the user may be displayed on a notification bar on the upper side of the display 150 according to one embodiment of the present disclosure.

FIG. 6B illustrates an electronic device providing an eMBMS according to various embodiments of the present disclosure.

Referring to FIG. 6B, the number of broadcasting channels which can be used by the user is displayed on a notification bar 620 located on an upper side of the display 150.

Similar to FIG. 6A, referring to FIG. 6B, it is assumed that the electronic device 101 sequentially moves to an area (first area) corresponding to a first eNB 601, an area (second area) corresponding to a second eNB 602, and an area (third area) corresponding to a third eNB 603.

The first eNB 601, the second eNB 602, and the third eNB 603 may provide different eMBMSes to the electronic device 101. Accordingly, whenever the electronic device 101 enters each of the first area, the second area, and the third area, the electronic device 101 may analyze eMBMS scheduling information received from each of the first to third eNBs 601, 602, and 603 to determine an eMBMS (for example, broadcasting data) which can be provided from each of the first to third eNBs 601, 602, and 603.

Referring to FIG. 6B, the eMBMS module 170 of the electronic device 101 may control the display 150 to display the number of broadcasting channels which can be provided from each of the first to third eNBs 601, 602, and 603. Accordingly, the display 150 of the electronic device 101 may display the number of broadcasting channels which the user can use in the first area, the number of broadcasting channels which the user can use in the second area, and the number of broadcasting channels which the user can use in the third area.

Referring to FIG. 6B, there is no broadcasting channel which the user can use in the first area, and accordingly, the display 150 displays no number in a position adjacent to an execution icon 621 included in the notification bar 620 under a control of the eMBMS module 170. When there is no available broadcasting channel, the eMBMS module 170 may control the display 150 to display no number in the position adjacent to the execution icon 621 as illustrated in FIG. 6B. In another embodiment of the present disclosure, the eMBMS module 170 may indicate that there is no broadcasting channel which the user can use in the first area by controlling the display 150 to display the icon 621 in black and white.

Referring to FIG. 6B, the number of broadcasting channels which the user can use in the second area is three, and accordingly, the display 150 displays may display "3" in a position adjacent to an execution icon 622 of the notification bar 620 under a control of the eMBMS module 170. At this time, when a user input for selecting the icon 622 is received from the user, the eMBMS module 170 may control the display 150 to display a list of the three broadcasting channels on the screen.

The number of broadcasting channels which the user can use in the third area is two, and accordingly, the display 150 displays may display "2" in a position adjacent to an icon 623 of the notification bar 620 under a control of the eMBMS module 170. At this time, when a user input for selecting the icon 623 is received from the user, the eMBMS module 170 may control the display 150 to display a list of the two broadcasting channels on the screen.

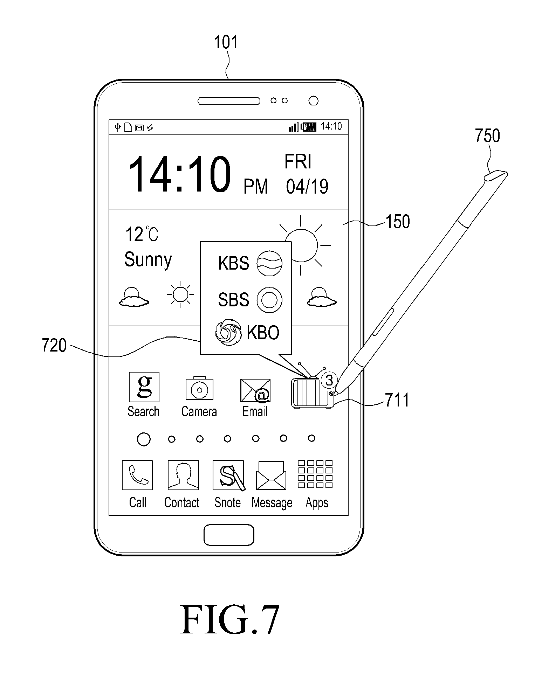

FIG. 7 illustrates an electronic device providing an eMBMS according to various embodiments of the present disclosure.

Referring to FIG. 7, the electronic device 101 is located in one area and may provide the user with broadcasting data which can be received through three broadcasting channels from the area in the eMBMS. Accordingly, the display 150 of the electronic device 101 may display "3" corresponding to the number of broadcasting channels which can be used by the user in a position adjacent to an execution icon 711 of the eMBMS application on the home screen (or background screen).

According to an embodiment of the present disclosure, the user may make a user input for selecting the execution icon 711 displayed together with the number of available broadcasting channels by using a stylus pen 750 or a finger. When the user input is made, the display control module 220 of the eMBMS module 170 may control the display 150 to display brief information on the broadcasting channels which can be used by the user (for example, names of broadcasting stations, broadcasting channel numbers or the like) in a form of a popup window 720.

The user input may be an input in the type different from that of the user input for executing the eMBMS application. For example, when the user clicks the execution icon 711 once, brief information on available broadcasting channels may be displayed on the home screen as the popup window 720. When the user clicks the execution icon 712 twice, the eMBMS application may be executed and thus the display 150 may switch the home screen to an execution screen on which the eMBMS application is executed under a control of the eMBMS module 170.

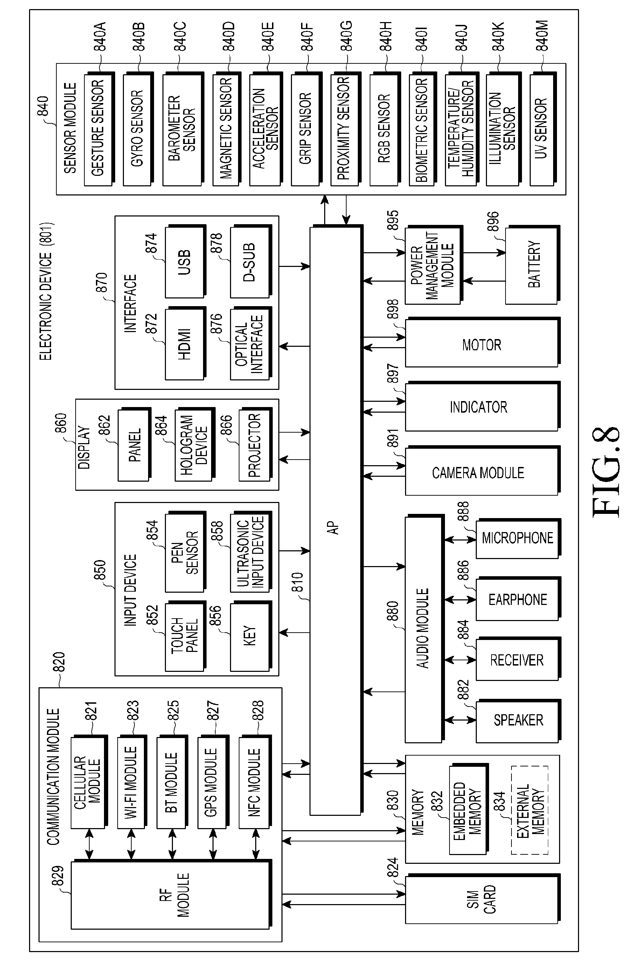

FIG. 8 is a block diagram of an electronic device according to various embodiments. An electronic device 801 may constitute, for example, all or a part of the electronic device 101 shown in FIG. 1.

Referring to FIG. 8, the electronic device 801 may include at least one of an Application Processor (AP 810, a communication module 820, a Subscriber Identifier Module (SIM card 824, a memory 830, a sensor module 840, an input device 850, a display 860, an interface 870, an audio module 880, a camera module 891, a power management module 895, a battery 896, an indicator 897, and a motor 898.

The AP 810 may control a plurality of hardware or software components connected to the AP 810 by driving an operating system or an application program, process various data including multimedia data, and perform calculations. The AP 810 may be implemented by, for example, a System on Chip (SoC). According to one embodiment of the present disclosure, the AP 810 may further include a Graphic Processing Unit (GPU).

The communication module 820 (for example, the communication interface 160) may perform data transmission/reception in communication between the electronic device 801 (for example, the electronic device 101) and other electronic devices (for example, the other electronic device 104 or the server 106) connected the electronic device 801 through a network. According to one embodiment of the present disclosure, the communication module 820 may include a cellular module 821, a Wi-Fi module 823, a BT module 825, a GPS module 827, an NFC module 828, and a Radio Frequency (RF) module 829.

The cellular module 821 may provide a voice call, a video call, a message service, or an Internet service through a communication network (for example, LTE, LTE-A, CDMA, WCDMA, UMTS, WiBro, GSM, or the like). In addition, the cellular module 821 may identify and authenticate an electronic device in a communication network using, for example, a subscriber identification module (for example, the SIM card 824). According to one embodiment of the present disclosure, the cellular module 821 may perform at least some of the functions which can be provided by the AP 810. For example, the cellular module 821 may perform at least some of the multimedia control functions.

According to one embodiment of the present disclosure, the cellular module 821 may include a Communication Processor (CP). Further, the cellular module 821 may be implemented by, for example, an SoC. Although FIG. 8 illustrates that the components, such as the cellular module 821 (for example, the CP), the memory 830, and the power management module 895 are separated from the AP 810, the AP 810 may include at least some of the above described components (for example, the cellular module 821) according to one embodiment.

According to an embodiment of the present disclosure, the AP 810 or the cellular module 821 (for example, the CP) may load a command or data received from at least one of a non-volatile memory and other components connected to each of the AP 810 and the cellular module 821 to a volatile memory and process the loaded command or data. Further, the AP 810 or the cellular module 821 may store data received from at least one of other components or created by at least one of other components in a non-volatile memory.

Each of the Wi-Fi module 823, the BT module 825, the GPS module 827, or the NFC module 828 may include, for example, a processor for processing data transmitted/received through the corresponding module. Referring to FIG. 8, the cellular module 821, the WiFi module 823, the BT module 825, the GPS module 827, and the NFC module 828 are illustrated as blocks separated from each other, but at least some (for example, two or more) of the cellular module 821, the WiFi module 823, the BT module 825, the GPS module 827, and the NFC module 828 may be included in one Integrated Chip (IC) or one IC package. For example, at least some (for example, a communication processor corresponding to the cellular module 821 and a Wi-Fi processor corresponding to the Wi-Fi module 823) of the processors corresponding to the cellular module 821, the Wi-Fi module 823, the BT module 825, the GPS module 827, and the NFC module 828, respectively, may be implemented by a single SoC.

The RF module 829 may transmit/receive data, for example, an RF signal. Although not illustrated, the RF module 829 may include, for example, a transceiver, a Power Amp Module (PAM), a frequency filter, a Low Noise Amplifier (LNA), or the like. Further, the RF module 829 may further include a component, such as a conductor, a conductive wire, or the like, for transmitting/receiving an electromagnetic wave in free space in wireless communication. Although the cellular module 821, the Wi-Fi module 823, the BT module 825, the GPS module 827, and the NFC module 828 are illustrated to share one RF module 829 in FIG. 8, at least one of the cellular module 821, the Wi-Fi module 823, the BT module 825, the GPS module 827, and the NFC module 828 may transmit/receive the RF signal through a separate RF module.

The SIM card 824 may be a card including a subscriber identification module, and may be inserted into a slot formed in a particular portion of the electronic device. The SIM card 824 may include unique identification information (for example, Integrated Circuit Card IDentifier (ICCID)) or subscriber information (for example, International Mobile Subscriber Identity (IMSI)).

The memory 830 (for example, the memory 130) may include an internal memory 832 or an external memory 834. The internal memory 832 may include at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, and the like).

According to an embodiment of the present disclosure, the internal memory 832 may be a Solid State Drive (SSD). The external memory 834 may further include a flash drive, for example, a Compact Flash (CF), a Secure Digital (SD), a Micro Secure Digital (Micro-SD), a Mini Secure Digital (Mini-SD), an extreme Digital (xD), a memory stick, or the like. The external memory 834 may be functionally connected to the electronic device 801 through various interfaces. According to one embodiment of the present disclosure, the electronic device 801 may further include a storage device (or storage medium), such as a hard drive.

The sensor module 840 may measure a physical quantity or detect an operation state of the electronic device 801, and may convert the measured or detected information into an electronic signal. The sensor module 840 may include, for example, at least one of a gesture sensor 840A, a gyro sensor 840B, an atmospheric pressure sensor 840C, a magnetic sensor 840D, an acceleration sensor 840E, a grip sensor 840F, a proximity sensor 840G, a color sensor 840H (for example, red, green, and blue (RGB) sensor), a biometric sensor 840I, a temperature/humidity sensor 840J, an illumination sensor 840K, and an Ultra Violet (UV) sensor 840M. Additionally or alternatively, the sensor module 840 may include, for example, an E-nose sensor (not illustrated), an electromyography (EMG) sensor (not illustrated), an electroencephalogram (EEG) sensor (not illustrated), an electrocardiogram (ECG) sensor (not illustrated), an Infrared (IR) sensor (not illustrated), an iris sensor (not illustrated), a fingerprint sensor (not illustrated), and the like. The sensor module 840 may further include a control circuit for controlling one or more sensors included therein.

The input device 850 may include a touch panel 852, a (digital) pen sensor 854, a key 856, or an ultrasonic input device 858. The touch panel 852 may recognize a touch input through at least one of, for example, a capacitive type, a resistive type, an infrared type, and an ultrasonic type. The touch panel 852 may further include a control circuit. The capacitive type touch panel may recognize physical contact or proximity. The touch panel 852 may further include a tactile layer. In this case, the touch panel 852 may provide a tactile reaction to a user.

The (digital) pen sensor 854 may be implemented, for example, using a method identical or similar to a method of receiving a touch input of a user, or using a separate recognition sheet. The key 856 may include, for example, a physical button, an optical key or a keypad. The ultrasonic input device 858 is a device which can detect an acoustic wave by a microphone (for example, a microphone 888) of the electronic device 801 through an input tool generating an ultrasonic signal to identify data, and can perform wireless recognition. According to an embodiment of the present disclosure, the electronic device 801 may also receive a user input from an external device (for example, a computer or a server) connected thereto, using the communication module 820.

The display 860 (for example, the display 150) may include a panel 862, a hologram device 864, or a projector 866. The panel 862 may be, for example, a Liquid Crystal Display (LCD), Active-Matrix Organic Light Emitting Diode (AM-OLED), or the like. The panel 862 may be implemented to be, for example, flexible, transparent, or wearable. The panel 862 may be also configured as one module together with the touch panel 852. The hologram device 864 may show a stereoscopic image in the air by using interference of light. The projector 866 may project light onto a screen to display an image. For example, the screen may be located inside or outside the electronic device 801. According to an embodiment of the present disclosure, the display 860 may further include a control circuit for controlling the panel 862, the hologram device 864, or the projector 866.

The interface 870 may include, for example, a High-Definition Multimedia Interface (HDMI) 872, a Universal Serial Bus (USB) 874, an optical interface 876, or a D-subminiature (D-sub) 878. The interface 870 may be included in, for example, the communication interface 160 illustrated in FIG. 1. Additionally or alternatively, the interface 870 may include, for example, a Mobile High-definition Link (MHL) interface, a Secure Digital (SD) card/MultiMedia Card (MMC) interface, or an Infrared Data Association (IrDA) standard interface.

The audio module 880 may bidirectionally convert a sound and an electrical signal. At least some components of the audio module 880 may be included in, for example, the input/output interface 140 illustrated in FIG. 1. The audio module 880 may process voice information input or output through, for example, a speaker 882, a receiver 884, earphones 886, the microphone 888, or the like.

The camera module 891 is a device which may photograph a still image and a video. According to an embodiment of the present disclosure, the camera module 891 may include one or more image sensors (for example, a front sensor or a rear sensor), a lens (not illustrated), an Image Signal Processor (ISP) (not illustrated) or a flash (not illustrated) (for example, an LED or xenon lamp).

The power management module 895 may manage power of the electronic device 801. Although not illustrated, the power management module 895 may include, for example, a Power Management Integrated Circuit (PMIC), a charger Integrated Circuit (IC), or a battery or fuel gauge.

The PMIC may be mounted to, for example, an IC or an SoC semiconductor. Charging methods may be classified into a wired charging method and a wireless charging method. The charger IC may charge a battery and prevent over voltage or over current from flowing from a charger. According to one embodiment of the present disclosure, the charger IC may include a charger IC for at least one of the wired charging method and the wireless charging method. A magnetic resonance scheme, a magnetic induction scheme, or an electromagnetic scheme may be exemplified as the wireless charging method, and an additional circuit for wireless charging, such as a coil loop circuit, a resonance circuit, a rectifier circuit, and the like may be added.

The battery gauge may measure, for example, the remaining amount of battery, a charging voltage and current, or temperature. The battery 896 may store or generate electricity, and may supply power to the electronic device 801 using the stored or generated electricity. The battery 896 may include, for example, a rechargeable battery or a solar battery.

The indicator 897 may display a particular status of the electronic device 801 or a part thereof (for example, the AP 810), for example, a booting status, a message status, a charging status, or the like. The motor 898 may convert an electrical signal into a mechanical vibration. Although not illustrated, the electronic device 801 may include a processing unit (for example, GPU) for supporting a mobile TV function. The processing unit for supporting mobile TV may process media data according to a standard of Digital Multimedia Broadcasting (DMB), Digital Video Broadcasting (DVB), media flow or the like.

The above described components of the electronic device according to various embodiments of the present disclosure may be formed of one or more components, and a name of a corresponding component element may be changed based on the type of electronic device. The electronic device according to the present disclosure may include one or more of the aforementioned components or may further include other additional components, or some of the aforementioned components may be omitted. Further, some of the components of the electronic device according to the various embodiments of the present disclosure may be combined to form a single entity, and thus, may equivalently execute functions of the corresponding elements prior to the combination.

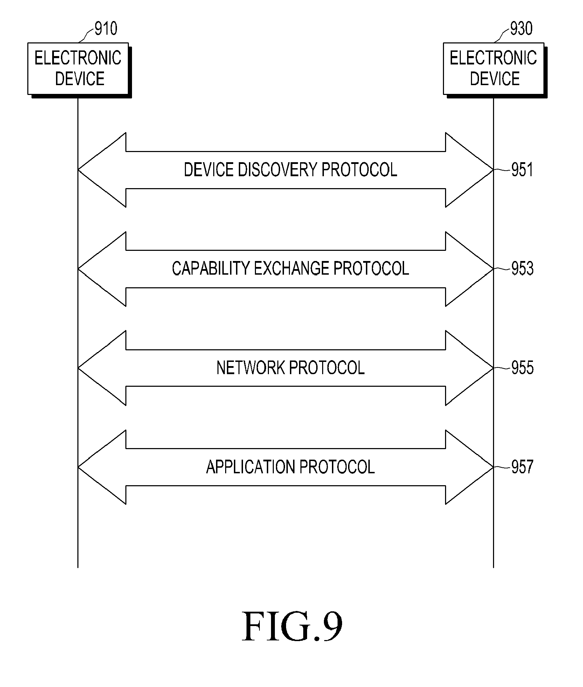

FIG. 9 illustrates a communication protocol between a plurality of electronic devices according to various embodiments of the present disclosure.

Referring to FIG. 9, for example, a communication protocol 900 may include a device discovery protocol 951, a capability exchange protocol 953, a network protocol 955, and an application protocol 957.

According to an embodiment of the present disclosure, the device discovery protocol 951 may be a protocol that allows the electronic devices (for example, an electronic device 910 or an electronic device 930) to detect an external electronic device which can be connected thereto or connect the found external electronic device thereto. For example, the electronic device 910 (for example, the electronic device 101) may detect, as a device which can be communicated with the electronic device 910, the electronic device 930 (for example, the other electronic device 104) by using the device discovery protocol 951 through a communication method (for example, Wi-Fi, BT, USB, or the like) which can be used by the electronic device 910. For a communication connection with the electronic device 930, the electronic device 910 may acquire identification information of the electronic device 930 detected through the device discovery protocol 951 and store the acquired identification information. For example, the electronic device 910 may establish the communication connection with the electronic device 930 at least based on the identification information.

According to an embodiment of the present disclosure, the device discovery protocol 951 may be a protocol for a mutual authentication among a plurality of electronic devices. For example, the electronic device 910 may perform an authentication between the electronic device 910 and the electronic device 930 based on communication information (for example, a Media Access Control (MAC) address, a Universally Unique IDentifier (UUID), a SubSystem IDentification (SSID), and an Information Provider (IP) address) for the connection with the electronic device 930.

According to one embodiment of the present disclosure, the capability exchange protocol 953 may be a protocol for exchanging information related to a service function which is supported by at least one of the electronic device 910 and the electronic device 930. For example, the electronic device 910 or the electronic device 930 may exchange information related to a service function currently provided by each of the electronic device 910 and the electronic device 930 through the capability exchange protocol 953. The exchangeable information may include identification information indicating a particular service among a plurality of services which can be supported by the electronic device 910 or the electronic device 930. For example, the electronic device 910 may receive, from the electronic device 930, identification information of a particular service provided by the electronic device 930 through the capability exchange protocol 953. In this case, the electronic device 910 may determine whether the particular service can be supported by the electronic device 910 itself based on the received identification information.

According to an embodiment of the present disclosure, the network protocol 955 may be a protocol for controlling flows of data which is transmitted/received to provide a service linked between the electronic devices (for example, the electronic device 910 and the electronic device 930) which are connected to communicate with each other. For example, at least one of the electronic device 910 and the electronic device 930 may control an error or data quality by using the network protocol 955. Additionally or alternatively, the network protocol 955 may determine a transport format of data transmitted/received between the electronic device 910 and the electronic device 930. Further, at least one of the electronic device 910 and the electronic device 930 may at least manage a session (for example, a session connection or a session termination) for a data exchange between the electronic devices by using the network protocol 955.

According to an embodiment of the present disclosure, the application protocol 957 may be a protocol for providing a process or information for exchanging data related to a service provided to an external electronic device. For example, the electronic device 910 (for example, the electronic device 101) may provide a service to the electronic device 930 (for example, the other electronic device 104 or the server 106) through the application protocol 957.

According to an embodiment of the present disclosure, the communication protocol 900 may include a standard communication protocol, a communication protocol designated by an individual or organization (for example, a communication protocol self-designated by a communication device manufacturing company or a network supplying company) or a combination thereof.

The "module" used in various embodiments of the present disclosure may refer to, for example, a "unit" including one of hardware, software, and firmware, or a combination of two or more of the hardware, software, and firmware. The "module" may be interchangeably used with a term, such as unit, logic, logical block, component, or circuit. The "module" may be the smallest unit of an integrated component or a part thereof. The "module" may be the smallest unit that performs one or more functions or a part thereof. The "module" may be mechanically or electronically implemented. For example, the "module" according to various embodiments of the present disclosure may include at least one of an Application-Specific Integrated Circuit (ASIC) chip, a Field-Programmable Gate Arrays (FPGAs), and a programmable-logic device for performing operations which have been known or are to be developed hereafter.

According to various embodiments of the present disclosure, at least some of the devices (for example, modules or functions thereof) or methods (for example, operations) according to the various embodiments of the present disclosure may be implemented, for example, as instructions stored in a non-transitory computer readable storage media in the form of programming modules. When the command is executed by one or more processors (for example, the processor 210), the one or more processors may execute a function corresponding to the command. The non-transitory computer-readable storage medium may be, for example, the memory 130. At least some of the programming modules may be implemented (for example, executed) by, for example, the processor 210. At least a part of the programming module may include, for example, a module, a program, a routine, a set of instructions and/or a process for performing one or more functions.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

A module or a programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Furthermore, some operations may be executed in a different order or may be omitted, or other operations may be added.

According to various embodiments of the present disclosure, an electronic device for providing an eMBMS to a user and a method of providing the eMBMS by the electronic device are provided.

According to various embodiments of the present disclosure, although a user who uses an electronic device according to an embodiment of the present disclosure does not execute an application related to the eMBMS, the user can recognize whether the user can receive the eMBMS.

According to various embodiments of the present disclosure, a user can recognize the number of broadcasting channels which the user can receive in a corresponding position of an electronic device by displaying the number of broadcasting channels through which broadcasting data is broadcasted in an eMBMS which can be provided to the user in a position adjacent to an execution icon for executing an eMBMS application although the user does not execute the eMBMS application.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for providing content by an electronic device, the method comprising:
receiving, from a base station, messages related to one or more content providing services which can be received in a service available area of the base station;
acquiring, from the messages, service information on the one or more content providing service which can be used by the electronic device from among the one or more content providing services; and
notifying a user of the service information by changing and displaying icons corresponding to the one or more content providing services according to the service information.

2. The method of claim 1, wherein receiving the messages related to the one or more content providing services which can be received in the service available area of the base station comprises receiving messages including one or more pieces of service information related to an evolved Multimedia Broadcast/Multicast Service (eMBMS) service.

3. The method of claim 1, wherein acquiring the service information on the content providing service which can be used by the electronic device among the one or more content providing services comprises acquiring information on one or more available channels.

4. The method of claim 1, wherein acquiring the service information on the content providing service which can be used by the electronic device among the one or more content providing services comprises acquiring the number of one or more available channels.

5. The method of claim 1, wherein changing and displaying the icons corresponding to the one or more content providing services according to the service information comprises displaying the number of one or more available channels in a position adjacent to the icon.

6. The method of claim 1, wherein notifying the user of the service information comprises displaying the service information in another position different from positions of the icons corresponding to the one or more content providing services.

7. The method of claim 6, wherein displaying the service information in another position different from the positions of the icons corresponding to the one or more content providing services comprises displaying the service information in a popup window in a position adjacent to the icon.

8. The method of claim 1, wherein notifying the user of the service information by changing and displaying the icons corresponding to the one or more content providing services according to the service information comprises outputting a sound or vibration related to the service information.

9. An electronic device for providing a content providing service, the electronic device comprising:
a display;
a communication interface configured to receive, from a base station, messages related to one or more content providing services which can be received in a service available area of the base station; and
an eMBMS module configured to:
acquire, from the messages, service information on a content providing service which can be used by the electronic device among the one or more content providing services, and
notify a user of the service information by changing and displaying icons corresponding to the one or more content providing services according to the service information.

10. The electronic device of claim 9, wherein the message is further configured to include one or more pieces of service information related to an eMBMS.

11. The electronic device of claim 9, wherein the eMBMS module is further configured to acquire service information on the content providing service which can be used, by acquiring information on one or more available channels.

12. The electronic device of claim 11, wherein the eMBMS module is further configured to acquire service information on the one or more available content providing services by acquiring the number of one or more available channels.

13. The electronic device of claim 10, wherein the display displays the number of one or more available content providing services in a position adjacent to the icon.

14. The electronic device of claim 9, wherein the eMBMS module notifies the user of the service information by displaying, through the display, the service information in another position different from the positions of the icons corresponding to the one or more content providing services

15. The electronic device of claim 14, wherein the display is further configured to display the service information on a popup window in a position adjacent to the icon.
